Europäisches Patentamt

European Patent Office

Office européen des brevets

(19)

(11) Numéro de publication: **0 077 761**
**A2**

(12) # DEMANDE DE BREVET EUROPEEN

(21) Numéro de dépôt: **82830259.6**

(22) Date de dépôt: **18.10.82**

(51) Int. Cl.³: **B 29 F 1/00**

(30) Priorité: **21.10.81 IT 64081**

(43) Date de publication de la demande:
**27.04.83 Bulletin 83/17**

(84) Etats contractants désignés:
**AT BE CH DE FR GB LI LU NL SE**

(71) Demandeur: **MECCANICA GENERALE - S.p.A.**
**Via San Giuseppe**
**I-60038 San Paolo di Jesi (AN)(IT)**

(72) Inventeur: **Massimo, Mancini**
**Via Salvi, 6**
**Jesi (AN)(IT)**

(74) Mandataire: **Baldi, Claudio**
**Viale della Vittoria 97**
**I-60035 Jesi (Ancona)(IT)**

(54) **Plateau tournant pour presses à injection pour le moulage de substances thermoplastiques.**

(57) La présente invention concerne un plateau tournant, conçu pour être installé sur le plateau mobile des presses à injection pour le moulage des substances thermoplastiques et destiné à soutenir un contre-moule, en entendant par contre-moule, la partie du moule qui recule lors de la phase d'ouverture de la pressse, en emportant avec soi la pièce moulée.

L'invention consiste essentiellement en un plateau quadrangulaire apte à soutenir le contre-moule et fixé latéralement par charnières à un plateau placé derrière, apte à être fixé sur le front du plateau mobile de la presse en permettant une extraction de la pièce non plus axialement, selon une direction perpendiculaire au plateau mobile de la presse mais plutôt transversalement suivant une direction oblique par rapport au plateau mobile même.

Cela permet ainsi de pouvoir mouler des pièces plus profondes pour une course d'ouverture équivalente de la presse à injection.

./...

FIG. 3

- 1 -

Plateau tournant pour presses à injection pour le moulage de substances thermoplastiques.

La présente demande de brevet pour invention industrielle concerne un plateau tournant, conçu pour être installé sur le plateau mobile des presses à injection pour le moulage des substances thermoplastiques et destiné à soutenir le contre-moule, entendant par contre-moule, la partie du moule qui recule lors de la phase d'ouverture de la presse, en emportant avec soi la pièce moulée.

Pour expliquer plus clairement le but que l'invention se propose de rejoindre, nous retenons nécéssaire de rappeler brièvement la configuration structurale du groupe de fermeture d'une presse à injection standard.

Le moule et le contre-moule sont respectivement fixés sur deux plateaux verticaux opposés, en acier fondu, l'un étant fixe, l'autre coulissant horizontalement sur des colonnes d'acier.

L'unité de fermeture est très souvent réalisée suivant un système à double genouillière qui permet d'obtenir une multiplication très élevée des efforts et donc de réaliser le rendement de fermeture désiré en employant des cylindres de diamètre contenu.

Il est évident que, pour chaque presse, il existe une valeur maximum de profondeur de la pièce qui peut y être moulée, valeur qui est égale, par calcul purement théorique, à la moitié de la valeur de la course d'ouverture, en entendant par course d'ouverture, l'espace parcouru par le plateau mobile de la presse.

De fait, seulement en respectant cette valeur maximum, la pièce moulée peut être extraite latéralement de la presse après avoir été enlevée axialement du contre-moule.

Le but de la présente invention est celui de rendre possible le moulage de pièces ayant une valeur supérieure à la valeur indiquée ci-dessus, en ayant recours à un plateau tournant où l'on fixe un contre-moule conçu pour permettre l'extraction de la pièce non plus axialement, selon une direction perpendiculaire au plateau mobile de la presse, mais plutôt transversalement selon une direction oblique par rapport au plateau même.

L'invention consiste essentiellement en une plaque quadrangulaire conçue pour soutenir le contre-moule et fixée latéralement par charnières à une plaque placée derrière, apte à être fixée sur le front du plateau mobile de la presse.

Pour expliquer plus clairement l'invention en question, la description se poursuivra en se référant aux dessins en annexe, reportés uniquement à titre d'illustration et non pas limitatif et ou l'on a représenté une forme préférée de réalisation de l'équipement mécanique selon l'invention.

On fait également noter que, pour des raisons évidentes d'espace, vu le format réduit de chaque table de dessin, la vue frontale du plateau tournant nécéssite de plusieurs tables de dessin, où l'on a reporté, respectivement, uniquement le quadrant supérieur gauche et le quadrant supérieur droit, vu que le plateau mobile présente un axe de symétrie horizontal.

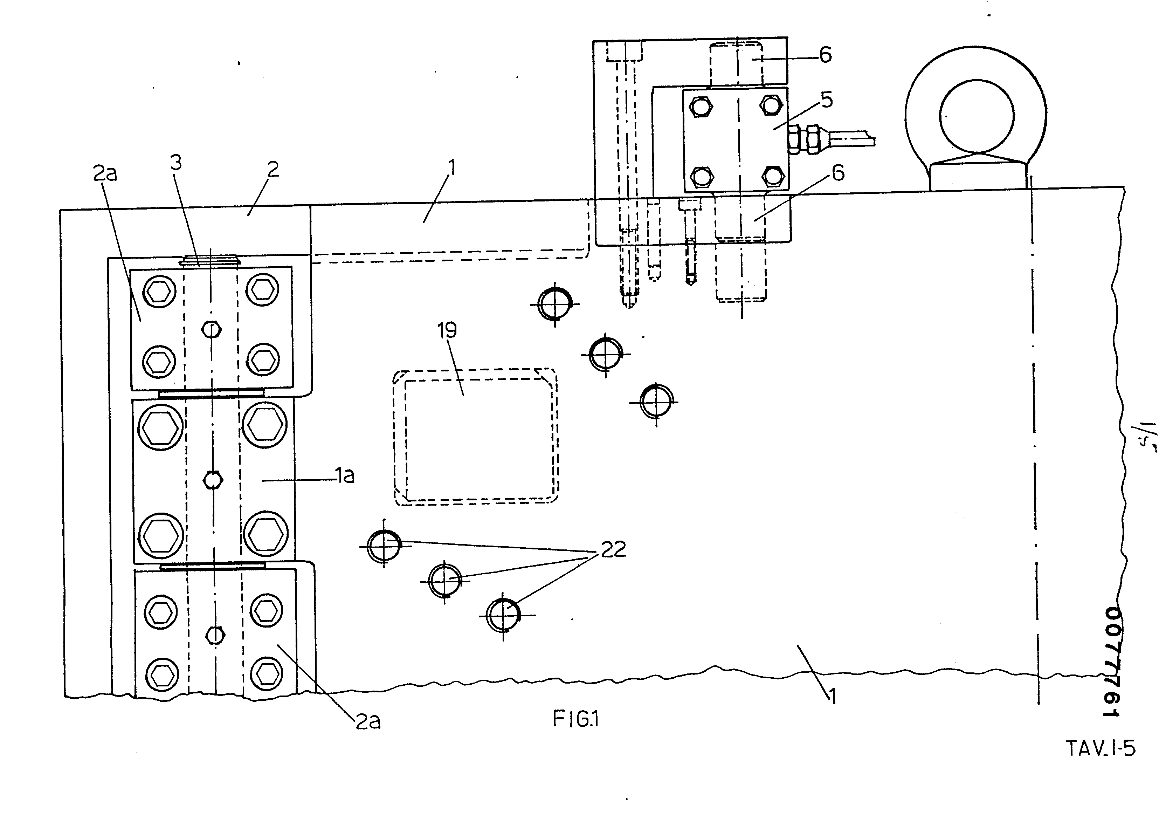

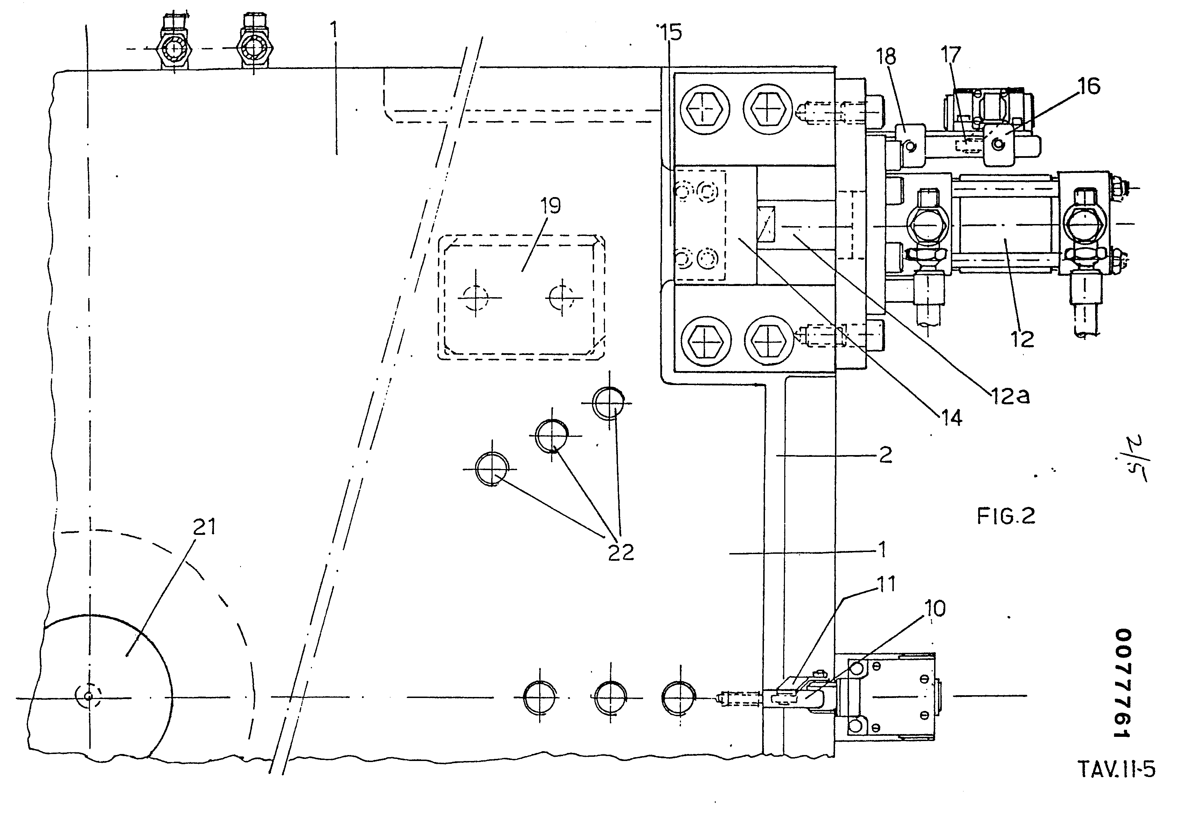

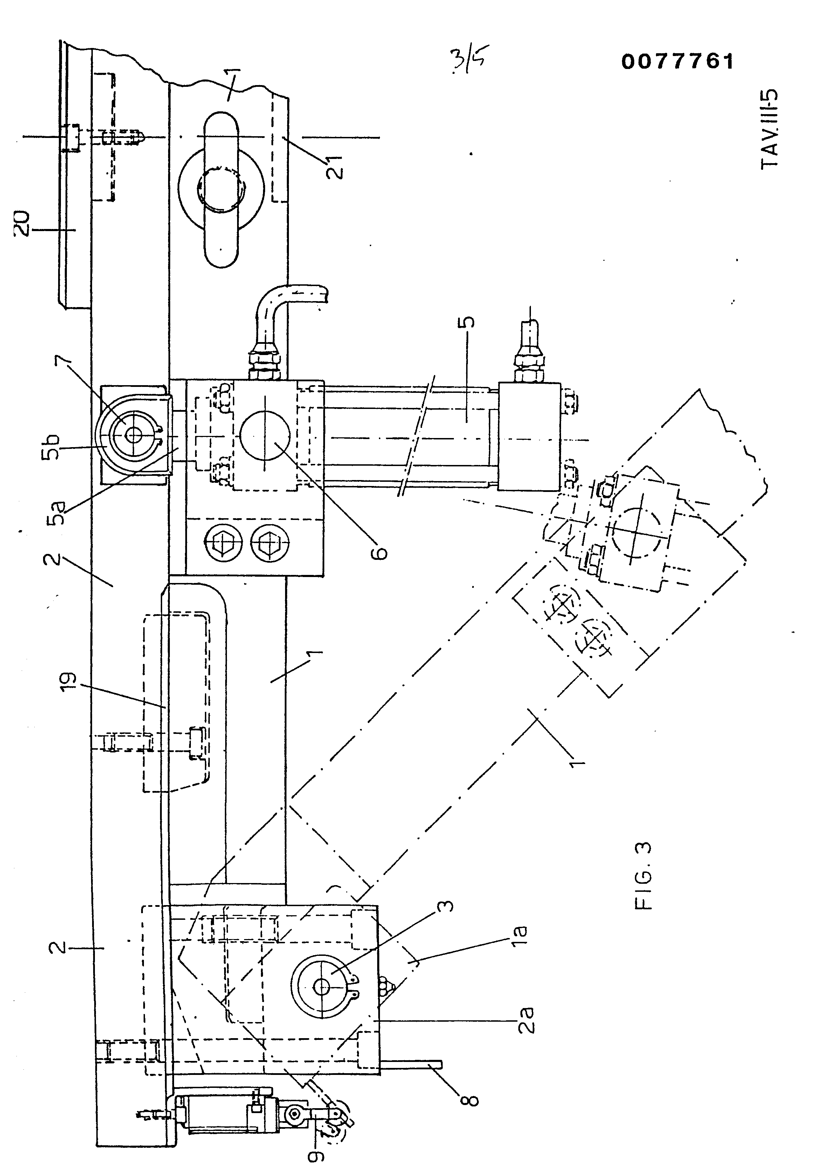

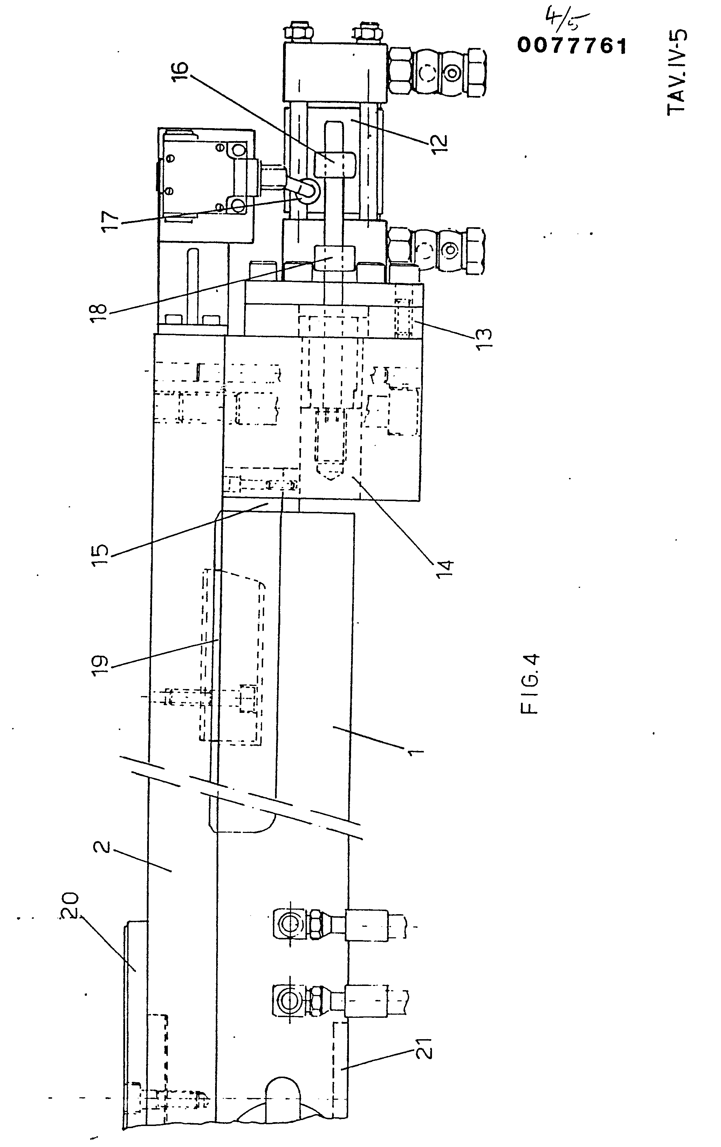

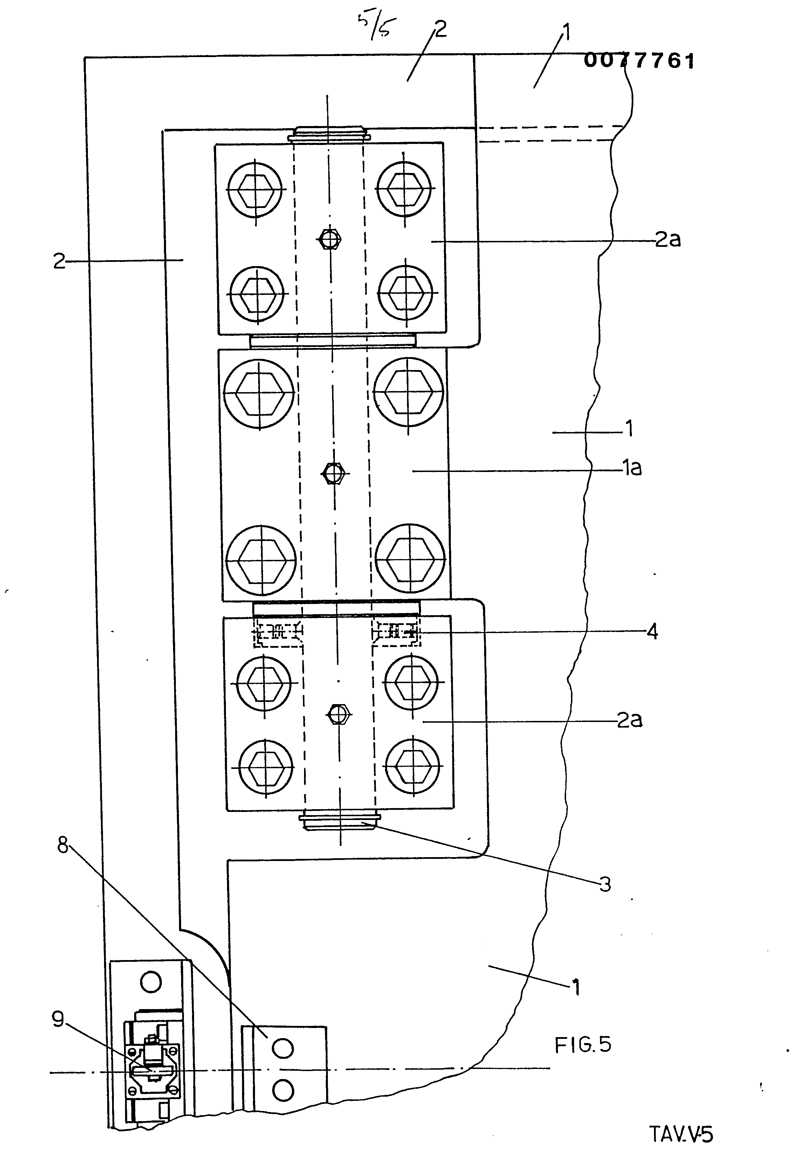

Le dessin n. 1 est une vue frontale de la partie supérieure du quadrant gauche du plateau tournant en question.

Le dessin n. 2 est une vue frontale du quadrant supérieur droit du plateau tournant dont il est question.

Le dessin n. 3 est une vue du haut du dessin n. 1.

Le dessin n. 4 est une vue du haut du dessin n. 2.

Le dessin n. 5 est une vue frontale de la partie gauche du quadrant supérieur gauche du plateau tournant en question.

En référence aux dessins susdits, l'équipement mécanique selon l'inven-

tion, comprend un plateau tournant (1), quadrangulaire, en acier ou en tout autre matériel approprié, fixé latéralement par charnières (sur le côté gauche dans le cas de la forme préférée de réalisation représentée ici) à un autre plateau de soutien (2), placé derrière, également en acier.

Les charnières sont au nombre de deux, équidistantes par rapport à l'axe de symétrie horizontal susdit et chacune d'elles se compose de deux ailes fixes (2a) et d'une aile tournante intermédiaire (1a), qui sont toutes réalisées avec de petits blocs prismatiques, en acier, reportés sur les plateaux (1) et (2).

Le tourillon (3) de chaque charnière est soutenu par des coussinets de butée (4).

La rotation du plateau (1) par rapport au plateau placé derrière (2), s'obtient par l'action d'un couple de cylindres hydrauliques (5), tous deux centrés sur un pivot vertical (6), dont un, supérieurement et l'autre inférieurement par rapport à la plaque ou plateau tournant (1).

La tige (5a) de chaque cylindre se termine par un anneau (5b), enfilé sur un pivot vertical (7) qui déborde de la plaque ou plateau fixe (2).

Sur le front du plateau (1), sur l'axe de symétrie horizontal et en proximité du côté fixé par charnières, on a vissé une petite équerre à "L" (8), qui, à la fin de la course d'ouverture, contraste avec un petit bras (9), prévu sur le front du plateau (2) et dont le déplacement détermine la fermeture d'un contact électrique qui provoque l'arrêt de fonctionnement des cylindres hydrauliques (5) en phase d'expulsion.

A la fin de la course de fermeture, au contraire, une petite griffe (10) dépassant sur le côté droit du plateau mobile (1), contraste contre un petit bras (11), prévu sur le front du plateau (2) et dont le déplacement détermine la fermeture d'un contact électrique qui arrête le fonctionnement des cylindres hydrauliques (5), en phase de rétraction, et actionne en même temps un couple de cylindres hydrauliques (12) à axe horizontal, à bridage approprié sur le côté externe d'un support (13), vissé sur le front du plateau fixe (2) en proximité du côté droit.

. Les dits cylindres hydrauliques (12) servent à faire avancer une coulis se cunéiforme (14), fixée à l'extrémité de chaque tige (12a), jusqu'à la superposer à un tourillon (15), débordant sur le côté droit du plateau tournant (1), qui reste ainsi fermé et bloqué solidement contre le plateau placé derrière (2).

Quand le coin (14) a terminé sa course d'avancement, une came (16), trans férant solidairement à la tige (12a), contraste avec un interrupteur de fin de course (17), qui donne le consentement à l'avancement du plateau mobile de la presse.

Au contraire, en fin de course d'ouverture de la presse, quand le moula ge a déjà eu lieu, une autre came (18), transférant elle-aussi solidaire ment à la tige (12a), contraste, en fin de course de rétraction de la tige même, avec un interrupteur de fin de course qui donne le consentement au fonctionnement des cylindres (5).

On fait noter que, sur le front du plateau (2), on a prévu des coins (19), un pour chaque quadrant, coins destinés à se loger, lorsque les plateaux sont fermés, dans les cavités conformes et correspondantes pré vues sur la face postérieure du plateau tournant (1) et cela pour permet tre l'obtention d'un auto-centrage du plateau (1) sur le plateau placé derrière (2) et en consequence, un centrage parfait du contre-moule, fixé sur le front du plateau (1) par rapport au moule, fixé sur le front du plan fixe de la presse.

Le numéro (20) indique l'anneau de centrage du plateau (2) sur le front du plateau mobile de la presse et le numéro (21) indique le lieu du cen trage du contre-moule sur la paroi frontale du plateau (1).

Le numéro (22) indique certains trous taraudés réalisés sur la paroi frontale du plateau tournant pour l'ancrage du contre-moule à la paroi même.

L'invention ainsi décrite et illustrée rejoint le but fixé vu que en fin de course d'ouverture de la presse, le plateau (1) portant le contre--moule, tourne latéralement poussé par le couple de cylindres (5) jus-

qu'à aller se placer devant l'opérateur, qui peut facilement et rapidement extraire la pièce moulée du contre-moule en l'enlevant suivant une direction perpendiculaire par rapport au plateau tournant et non au plateau mobile de la presse.

Même en tenant compte de l'encombrement axial de l'équipement mécanique en question (épaisseur du plateau (1) et du plateau (2)), encombrement qui comporte évidement une réduction de l'épaisseur maximum du moule utilisable, la valeur maximum de la profondeur de la pièce à mouler est toutefois considérablement supérieure à celle rendue possible par l'extraction de la pièce selon une direction axiale, perpendiculaire au plateau mobile de la presse.

Cette valeur maximum augmentée est possible surtout grâce à l'épaisseur réduite du plateau de soutien (2) dont les dimensions ne demandent aucun moyen particulier en considération des contraintes mécaniques insignifiantes auquelles il est soumis, à différence de ce qui se produit pour les équipements équivalents qui travaillent avec un plateau transférant transversalement.

On peut tout autant considérer comme étant négligeable, l'usure de la charnière par rapport à l'usure à laquelle sont soumis les couples prismatiques existants dans les équipements équivalents susdits, à plateau transférant.

On peut en dire autant en ce qui concerne la lubrification et l'entretien néccésité par l'équipement mécanique selon la présente invention.

Son nettoyage enfin, est fortement facilité par la possibilité d'éloigner le plateau tournant du plateau fixe placé derrière.

Les temps de démoulage sont eux-aussi inférieurs à ceux qui sont néccésaires aux équipements équivalents travaillant avec un plateau transférant, vu que la pièce moulée se trouve à être devant l'opérateur préposé à son extraction avec une course du piston considérablement réduite par rapport à la course néccésaire du plateau transférant et avec, entre autre, des contraintes nettement inférieures.

On fait noter, en outre, que l'emploi du plateau tournant en question, est de toute manière avantageuse, même dans le cas où la pièce moulée, étant donnée sa conformation particulière, devrait être extraite du mou le ou de la matrice au lieu de l'être du contre-moule.

En effet, là rotation du plateau mobile, crée un espace vide devant la matrice, ce qui facilite l'opération d'extraction de la pièce.

Il est entendu que la présente description se réfère à une forme préférée de réalisation de l'équipement mécanique selon l'invention et que des techniciens du secteur pourront donc ajouter des variantes, des modifications, surtout de construction, sans pour autant sortir des limites de l'invention ci-dessus décrite, illustrée et ensuite revendiquée.

STUDIO DI CONSULENZA
BREVETTI - MARCHI
Dott. Ing. CLAUDIO BALDI
V.le della Vittoria 97 - JESI - Tel. 53845

– 1 –

Revendications

1) Plateau tournant pour presses à injection pour le moulage de substances thermoplastiques, caractérisé par le fait de consister en un plateau quadrangulaire, en acier ou en tout autre matériel apte, fixé sur un côté par charnières à un plateau de soutien placé derrière; les deux charnières sont équidistantes de l'axe de symétrie horizontal du plateau et sont toutes deux formées par deux aîles fixes et par une aîle tournante intermédiaire, réalisées avec des petits blocs prismatiques en acier,qui sont reportés et vissés sur les plateaux; le tourillon de chaque charnière est soutenu par des coussinets de butée.

2) Plateau tournant pour presses à injection pour le moulage de subtances thermoplastiques, selon la revendication précédente, caractérisé par le fait que selon une forme préférée de réalisation, l'ouverture et la fermeture du plateau tournant susdit s'obtient grâe à l'action d'un couple de cylindres hydrauliques, centrés tous les deux sur un pivot vertical, l'un supérieurement et l'autre inférieurement au plateau tournant; la tige de chaque cylindre se termine par un anneau, enfilé sur un pivot vertical, débordant du plateau fixe.

3) Plateau tournant pour presses à injection pour le moulage de substances thermoplastiques, caractérisé par le fait que, en fin de course de rotation d'ouverture, une petite équerre à "L", prévue sur le front de la plaque ou plateau tournant contraste avec un petit bras prévu sur le front du plateau de soutien et dont le déplacement détermine la fermeture d'un contact électrique qui arrête le fonctionnement des cylindres hydrauliques susdits, en phase d'expansion.

4) Plateau tournant pour presses à injection pour le moulage des substances thermoplastiques, caractérisé par le fait que, en fin de course de rotation de fermeture, une griffe, qui déborde latéralement du plateau tournant, en correspondance du côté opposé à la charnière, contraste avec un petit bras, prévu sur le front du plateau de soutien ou support et dont le déplacement détermine la fermeture d'un contact électrique qui arrête le fonctionnement des cylindres hydrauliques susdits en phase de contraction et en même temps actionne deux autres cylindres hydrauliques à axe horizontal opportunément munis de bridage à la paroi latérale externe d'un petit bloc de soutien, vissé sur le front du plateau fixe en proximité de son côté non fixé par charnières; ce dernier couple de cylindres hydrauliques sont préposés à faire avancer chacun d'eux une coulisse cunéiforme, qui est à superposer à un tourillon correspondant, débordant du côté non fixé par charnières du plateau tournant.

5) Plateau tournant pour presses à injection pour le moulage de substances thermoplastiques, selon les revendications précédentes, caractérisé par le fait que sur la paroi frontale de la plaque fixe, on a prévu des coins - un pour chaque quadrant - coins qui sont destinés à se loger, lorsque les plateaux sont fermés, dans des cavités conformes et correspondantes situées sur la face postérieure du plateau tournant.

6) Plateau tournant pour presses à injection pour le moulage des sustances thermoplastiques, caractérisé par le fait que le plateau fixe de soutien présente sur la paroi postérieure un anneau pour son centrage sur le front du plateau mobile de la presse, sur lequel il est fixé par des organes de connection traditionnaux.

7) Plateau tournant pour presses à injection pour le moulage de substances thermoplastiques, caractérisé par le fait que le plateau tournant présente frontalement une cavité circulaire pour le centrage du contre--moule sur la paroi antérieure du plateau tournant.

8) Plateau tournant pour presses à injection pour le moulage de substances thermoplastiques, caractérisé par le fait que le plateau tournant susdit présente une série de trous taraudés pour l'ancrage du contre--moule sur la paroi frontale.

FIG1

TAV.I-5

0077761

1/5

FIG.2

2/5

0077761

TAV.II-5

**0077761**

TAV.III-5

FIG. 3

FIG.4

TAV.IV-5

0077761

4/5

5/5

0077761

FIG.5

TAV.V5